# EUROPEAN PATENT SPECIFICATION

(11) **EP 2 898 028 B1**
(45) Date of publication and mention of the grant of the patent: **01.09.2021**
(21) Application number: 13801737.1
(22) Date of filing: 17.09.2013
(51) Int. Cl.: C09D 11/30, C09D 11/38, B41C 1/16

(54) **AQUEOUS COMPOSITION FOR INKJET PRINTING, AND ITS USE FOR DECORATION OF CERAMIC MATERIALS**
WÄSSRIGE ZUSAMMENSETZUNG FÜR TINTENSTRAHLDRUCK UND SEINE VERWENDUNG ZUM DEKORIEREN VON KERAMIKMATERIALIEN
COMPOSITION AQUEUSE POUR L'IMPRESSION PAR JET D'ENCRE ET SON UTILISATION POUR LA DÉCORATION DE MATÉRIAUX CÉRAMIQUES

(30) Priority: 20.09.2012 IT MO20120226
(43) Date of publication of application: 29.07.2015
(73) Proprietor: System Ceramics S.p.A., 41042 Fiorano Modenese MO (IT)
(72) Inventor: STEFANI, Franco, I-41049 Sassuolo (Modena) (IT); CAMORANI, Carlo Antonio, I-42014 Castellarano (Reggio Emilia) (IT)
(74) Representative: Biggi, Cristina
(86) International application number: PCT/IB2013/058601
(87) International publication number: WO 2014/045192

(56) References cited:
- EP-A1- 1 020 499
- EP-A1- 1 213 332
- EP-A1- 2 100 930
- US-A- 4 024 096
- US-A1- 2003 069 329
- None

## Description

The present invention refers in general terms to the use of a composition comprising water and a liquid compound with lower evaporability compared to that of the water, for use in indirect inkjet printing, and that is particularly useful for the decoration of ceramic materials, for example tiles or the like.

"Indirect inkjet printing" is intended as a decorating technique in which the employment of inkjet systems is provided for realizing an image in liquid form on a transfer surface, materializing this image by having the decorating material (typically in the form of powder) adhere thereto, and lastly, transferring the decoration obtained on the transfer surface to the desired receiving surface.

Examples of such techniques are described in IT1314624, WO2005025828 and WO2007096746, in which the use of water is provided as the liquid, which is particularly suitable in terms of its physicochemical and ecological characteristics.

With the employment of this technology, the inkjet apparatus remains protected from clogging and wear as the decorating material does not pass through the printing apparatus, given that it is applied to the transfer surface and then to the final material. Moreover, decorating materials in the form of granular pigments of various types and dimensions can be utilized, thereby improving the possibilities for use and the aesthetic results. An economic advantage is also realized, compared to technologies that provide for having the pigments pass directly through the inkjet apparatus, for example in the liquid suspension state. In fact, in this case, the processes needed to obtain the required fineness of the pigments are reflected in an increase in production costs.

By using water in indirect inkjet apparatuses, however, there is a possibility that given that water is evaporable, the residues dispersed therein can clog the minuscule ejection holes of the apparatus, creating possible problems for the operation or maintenance of the apparatus. It is true that extremely pure water can be used, however, in practice, in this case as well, the water can become contaminated, in a short amount of time, as a result of the printing process. Any possible contamination can be accentuated by the fact that, during operation, it is indispensable for the water to be kept in continuous recirculation by means of special degassing filters.

US4024096A discloses compositions ink compositions suitable for printing onto glass and other ceramic surfaces, which develops enough adhesion on glass to resist washing off. Said compositions are based on the use of a novolac resinous binder.

EP1020499A1 discloses ink compositions comprising heat transferable dyes, acetylene glycol surfactant, glycol ethers and water. The heat transferable dyes are dispersed water-insoluble dyes used to color textiles.

US2003/069329A1 discloses ink compositions comprising at least a colorant, resin emulsion particles, a water-soluble organic solvent and water. The resin emulsion particles are particles of a polymer having film forming properties.

EP2100930A1 discloses ink compositions comprising pigment-particles covered with a water-insoluble resin, resin particles, a water soluble organic solvent, a solid wetting agent and water.

EP1213332A1 discloses ink compositions for inkjet recording comprising colorants, glycols and water.

It is also true that the inkjet apparatus could be sealed so as to prevent this evaporation of water through the nozzles when it is not in operation. However, this would involve complications and additional costs, and it is also not always possible to do so. Another drawback results from the need to maintain a proper pH level for preventing corrosion problems in the inkjet apparatus. If for this purpose salts in a solution or high-viscosity liquids are used as additives, then blockage may occur for the same reason explained hereinabove. Even in the case in which one wishes to utilize gases in an aqueous solution, such as ammonia for example, they would be eliminated quickly owing to the degassing.

A further drawback involving blockage of the nozzles may arise when additives need to be added in order to lower the surface tension of the water. Such lowering may be required for the purpose of achieving greater precision in the reproduction of the image. In fact, when water with normal surface tension is ejected on the (non-absorbent) surface of the transfer belt, it tends to give rise to coalescence phenomena (that is, it condenses into larger drops) and to move. Imprecise and poorly defined images would thus be created.

Lowering of the surface tension may also be necessary in order to remain within the specifications for correct inkjet operation.

Together with the drawbacks described hereinabove, it must also be considered that reducing the characteristic of evaporability of the liquid may be disadvantageous, as in this case the transfer surface would tend to become soiled in a manner that cannot be controlled.

It must also be specified that with this indirect inkjet printing system, the use of inks normally used in direct printing processes is often precluded. In fact, these inks tend to soil both the transfer surface and the decorating material (in the form of powder) used for printing. Moreover, residues of liquids with low evaporability that remain on the transfer surface cause a repetition of so-called "double" images with each rotation cycle.

Therefore, there is a strong need in the sector to have an aqueous solution available for use in an inkjet apparatus that does not clog the apparatus when it is in a non-operative state with the ejector holes exposed to the environment, and that enables the achievement of sufficiently clear and distinct decorations for the industrial use thereof. At the same time, said aqueous solution should have a sufficient level of evaporability so as not to leave substantial liquid residue on the transfer surface onto which it is ejected.

The aim of the present invention is therefore to provide an adequate response to the technical needs pointed out hereinabove.

This and other aims have been achieved by the Applicant, who has found that an aqueous solution comprising water admixed with at least one component having physical properties as described in detail below, is capable of providing the desired response to these needs.

Therefore, an aspect of the present invention is the use of an aqueous composition comprising water and at least one liquid compound miscible therewith for indirect inkjet printing, characterized in that said at least one liquid compound has evaporation rate lower than 1/30 of the evaporation rate of the water, as measured in the presence of air with a rate of 0.2 m/s in a direction parallel to the surface of the liquid, at an atmospheric pressure of 103,3 kPa (1033 mbars), a temperature of 40 °C, relative humidity of approximately 20% and comparing the losses in weight thus obtained, with the time and surface of the liquid exposed to the air being equal, and in that said aqueous composition does not contain pigments or other materials intended to remain present in the final decoration.

In one embodiment, the present composition consists in a mixture of water with said miscible liquid, as described in detail below.

Another aspect of the invention is the use of the present aqueous composition in an indirect inkjet printing apparatus, preferably for the decoration of a ceramic surface, even more preferably in the form of a tile. The present invention may be understood more clearly also by referring to the accompanying drawings, in which:
- Figure 1 is a schematic, enlarged section of two ejector nozzles 1 of an inkjet apparatus 2 supplied with a solution 3 (in this specific case, containing the tripropylene glycol n-butyl ether, TPnB, compound as the miscible liquid with a low evaporation rate) during the operating phase;
- Figure 2 is a section like that appearing in Figure 1, at the start of a period of inactivity;
- Figure 3 is a section like that appearing in Figure 1, following a long period of inactivity;
- Figure 4 is a section like that appearing in Figure 3 upon resuming activity following a long period of inactivity.

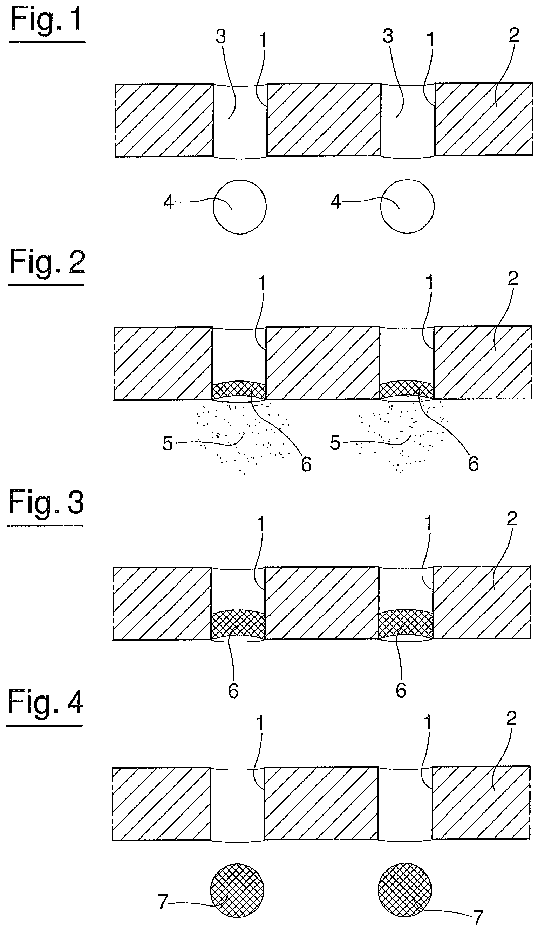

With reference to Figure 1, in further detail, the nozzles 1 of the inkjet apparatus 2 are supplied with the solution 3. It is pointed out that drops 4 of the solution 3 are ejected from the nozzles evenly and homogeneously. With reference to Figure 2, it is pointed out that when ejection is deactivated, the water begins to evaporate in the proximity of the nozzles 1, forming vapour 5. At the same time, the TPnB begins to concentrate on the wall of the nozzles 1 towards the terminal end thereof, giving rise to the formation of a layer of TPnB 6.

With reference to Figure 3, it is pointed out that, as the period of inactivity passes, the layer of TPnB becomes increasingly thicker and concentrated; this leads to a gradual slowing-down until there is almost total inhibition of any further evaporation of the water.

With reference to Figure 4, it is pointed out that reactivation of the apparatus, even after a long period of inactivity, takes place properly, given that the layer of TPnB that has formed, though having a slightly higher viscosity than the water, is capable of being ejected in the form of drops 7 all the same, substantially without the need for additional unclogging procedures.

As mentioned above, the object of the present invention is the use of an aqueous composition in an indirect inkjet apparatus, comprising water and at least one miscible liquid compound having an evaporation rate lower than that of the water. The Applicants have found that the composition can be used in indirect inkjet systems for decorating ceramic material, even without adding further components (such as surfactants or the like) to the composition. In fact, it was noted that mixing a liquid component with a low evaporation rate, as described herein, with water can suffice to achieve the desired aim and results. Therefore, in a preferred embodiment, the invention refers to the use of an aqueous solution in an indirect inkjet apparatus, said solution consisting of water and a miscible liquid characterized in that the liquid has a lower evaporation rate than that of the water. In this manner, the composition is also characterized in that it does not contain pigments or other materials intended to remain present in the final decoration. In fact, the presence of the two sole components (water and the miscible liquid with a low evaporation rate) is sufficient to ensure excellent results in terms of the reproducibility and precision of the indirect inkjet printing process.

In this regard, an "evaporation rate lower than that of the water" or "low evaporation rate" is intended to indicate an evaporation rate that is lower than at least 1/30 of the evaporation rate of the water, as measured in the presence of air with a rate of 0.2 m/s in a direction parallel to the surface of the liquid, an atmospheric pressure of 103,3 kPa (1033 mbars), a temperature of 40 °C, relative humidity of approximately 20% and comparing the losses in weight thus obtained, with the time and surface of the liquid exposed to the air being equal. In one embodiment, said evaporation rate is lower than or equal to 1/50 of the evaporation rate of the water, more preferably it is lower than or equal to 1/100 of the evaporation rate of the water; values lower than or equal to 1/250 of the evaporation rate of the water being even more preferable. Examples of preferred values such as these are rates lower than 1/2000 or even 1/4000.

In a particularly preferred embodiment, said evaporation rate is lower than or equal to 1/400 of the evaporation rate of the water.

Essentially, said evaporation rates can be measured by pouring a layer of a height of 3mm of liquid to be examined, into cylindrical containers of a diameter of 60mm and a height of 6mm; one of the containers must contain distilled water. The containers are then arranged in a heater with a recirculation of air of 2 m/s in a horizontal direction, with a temperature of approximately 40 °C and a relative humidity of 20%. At regular intervals of time, for example every 2 hours, the container is weighed, with a precision of at least 1 mg. The weights shall be checked until the decrease in weight becomes substantially linear with respect to time. The value for evaporability is expressed in g/m2h and these values are compared with the value for the water.

By way of example, the data obtained for several products, expressed in g/m2h and in relation to the water evaporation rate, respectively, with this procedure, are as follows:
Double-distilled water = 979; 1.
Monoethylene glycol (MEG) = 28.15; 1/35.
Tripropylene glycol n-butyl ether (TPnB) = 2.24; 1/437.
Methoxyprolyethylene glycol 350 (MPEG 350) = 0.17; 1/5759.
Polyethylene glycol 200 (PEG 200) = 0.42; 1/2331.

In any case, the selected miscible liquid with a low evaporation rate can be present in the aqueous composition at a concentration within the range of 0.005% to 20% by weight, based on the total weight of the composition, and preferably within the range of 0.005 to 5%. Said derivative is even more preferably present at a concentration within the range of 0.007% to 2% by weight; more preferably, within the range of 0.008% to 1% by weight.

In one embodiment, said concentration ranges between 0.01% and 0.5%. In particular, in this range it was noted that when the inkjet is stopped, evaporation from the holes is inhibited within a few minutes. In fact, for the entire period of inactivity, it was noted that in these ranges of concentration, the evaporation rate remains substantially at a level approximately corresponding to that of the miscible liquid utilized. The inkjet is then able to start again without any problem, even after a long period of inactivity. Advantageously, given the limited concentration of the miscible liquid, during operation the liquid ejected behaves substantially as pure water does, that is, it does not leave damaging residues on the transfer surface.

As regards the liquid of the present composition that is miscible with water, generally it can be selected from among those liquids that have a viscosity of less than 15 cP at 25 °C and that have an evaporation rate lower than 1/30, preferably lower than 1/50, of the evaporation rate of the water, said rate being measured in the presence of air with a rate of 0.2 m/s in a direction parallel to the surface of the liquid, at a pressure of 103,3 kPa (1033 mbars), a temperature of 40 °C, and relative humidity of 20%. In this regard, examples of liquids miscible with water can consist of glycolic, glycol ether, silicone, amine, surfactant derivatives and the like.

In one embodiment, said miscible liquid is a glycolic derivative, preferably glycol ether, or polyethylene glycol (PEG) or methoxypropylethylene glycol (MPEG).

Even more preferably, the miscible liquid can be selected from the group consisting of: diethylene glycol n-butyl ether acetate (CAS 124-17-4); butoxytriglycol ether (CAS 143-22-6); diethylene glycol monobutyl ether (CAS 112-34-5); diethylene glycol monoethyl ether (CAS 111-90-0); triethylene glycol monoethyl ether (CAS 112-50-5); diethylene glycol monohexyl ether (CAS 112-59-4); ethylene glycol monohexyl ether (CAS 112-25-4); triethylene glycol monomethyl ether (CAS 112-35-6); dipropylene glycol n-butyl ether (CAS 29911-28-2); tripropylene glycol methyl ether (CAS 25498-49-1); tripropylene glycol n-butyl ether (CAS 55934-93-5); ethylene glycol n-butyl ether acetate (CAS 112-07-2); tetraethylene glycol methyl ether (CAS 23783-42-8); tetraethylene glycol butyl ether (CAS 1559-34-8); methoxypolyethylene glycol (MPEG), MPEG 350, polyethylene glycol (PEG) and PEG 200, ethylene glycol (CAS 107-21-1), diethylene glycol (CAS 111-46-6), triethylene glycol (CAS 112-27-6), tetraethylene glycol (CAS 112-60-7), dipropylene glycol methyl ether (CAS 34590-94-8), dipropylene glycol methyl ether acetate (CAS 88917-22-0), dipropylene glycol n-propyl ether (CAS 29911-27-1), propylene glycol n-butyl ether (CAS 5131-66-8), propylene glycol phenyl ether (CAS 770-35-4), propylene glycol diacetate (CAS 623-84-7), diethylene glycol methyl ether (CAS 111-77-3), diethylene glycol n-butyl ether (CAS 112-34-5), diethylene glycol n-butyl ether acetate (CAS 124-17-4), ethylene glycol n-butyl ether (CAS 111-76-2), ethylene glycol phenyl ether (CAS 122-99-6), and ethylene glycol n-butyl ether in a mixture (CAS 9004-77-7).

In one embodiment, tripropylene glycol n-butyl ether (TPnB) and MPEG 350, are preferred, MPEG 350 being even more preferred. In fact, it has been observed that as they have an evaporation rate of approximately 1/440 and 1/5760, respectively, compared to the evaporation rate of the water, a relatively low dynamic viscosity, of 7 cP and 27 cP at 25 °C, respectively, and excellent solubility in water, TPnB and MPEG 350 are particularly suited to the present invention.

Hence, drops of the aqueous solution can be ejected from the nozzles of the indirect printing apparatus evenly and homogeneously without causing problems affecting the nozzles or the surface receiving the drops.

The reactivation of the indirect inkjet apparatus, even after not being used for a long period of time, can take place properly (for example as illustrated in Figure 4), given that the layer of miscible liquid (such as TPnB or MPEG) that has formed will have a viscosity that is somewhat higher than that of the water, but in any case, within the acceptable limit of 7 cP to 27 cP at 25 °C, and can thus be ejected in the form of drops without requiring substantial intervention.

However, in the case in which the viscosity proves to be too high and such as to impede proper ejection at ambient temperature, temporary heating of the inkjet apparatus can be activated so as to lower the viscosity of the liquid.

The process for the preparation of the aqueous composition comprises mixing the miscible liquid, selected as indicated hereinabove, with water, possibly in the presence of additional components such as surfactants and/or an amine. Mixing can take place according to techniques known in the sector and under conditions with the temperature typically ranging between 15 °C and 40 °C. It is preferable that the water utilized be water having a high degree of purity in terms of ions and/or dissolved salts, above all to avoid the formation of residual material on the transfer surface or in the inkjet apparatus. Therefore, the use of distilled, demineralized, ultra-pure or deionized water is preferred, double-distilled water being particularly preferred.

Even more preferably, the double-distilled water is mixed solely with TPnB or MPEG, still more preferably at a concentration within the range of 0.20% to 0.15% by weight, thereby constituting a composition suitable for use according to the invention.

Preferably, the viscosity of the selected miscible liquid is lower than 15 cP, even more preferably lower than 10 cP, being measured at 25 °C, using a Brookfield viscometer, the DV-III ULTRA model, equipped with an ULA spindle and a TC-502P apparatus (also made by the Brookfield firm) for temperature control. Liquids of a viscosity ranging between 1 to 4 cP at 25 °C can also be utilized. Moreover, in accordance with the characteristics of the inkjet apparatus, liquids with a higher viscosity, for example 30 cP and higher, may be selected.

Inkjet apparatuses are generally built to be compatible with slightly basic liquids. For this reason as well, the present composition preferably has a pH within the range of 7 to 10, values between 8 and 10 being particularly preferred.

In this regard, the present composition can further comprise pH adjusters, preferably liquid amines of suitable viscosity and evaporation rates, so as to adjust the pH to values within the basic ranges indicated above.

In one embodiment, said liquid amines are selected from: dimethylethanolamine (DMEA), monomethylethanolamine (MMEA), dimethylaminopropylamine (DMAPA), diethylenetriamine (DETA), Jeffamine® D-400, a product of Huntsman (CAS 9046-10-0), ethylenediamine (EDA), aminoethylpiperazine-HP, (CAS 140-31-8, 111-10-0), n-aminopropylmorpholine (CAS 123-00-2), triethylenetetramine (CAS 112-24-3), and tetraethylenepentamine (CAS 112-57-2) .

In a preferred embodiment, the amine is dimethylethanolamine (DMEA). In fact, it has been noted that owing to its low viscosity and its high water solubility, it proves to be particularly suitable as a pH adjuster for values between 8 and 10. Generally, the amount of amine to be added can vary between 5mg/l and 40mg/l, depending for example on the type of amine, or the pH of the aqueous composition one wishes to obtain.

The composition may possibly also comprise a surfactant, suitable for reducing the surface tension thereof to the value desired so as to correspond more closely to the specifications of the inkjet apparatus and to prevent coalescence phenomena on the transfer surface. Solely by way of example, the surface tension of the solution can be reduced down to 0,030 N/m (30 dyne/cm) (at 25 °C). The use of a surfactant makes it possible to use water with an even lower degree of purity with respect to double-distilled water (for example deionized water), which contributes to greater savings and versatility, while maintaining operational reliability. The preferred surfactants are siloxane compounds in a liquid form, typically having low viscosity.

More specifically, the preferred surfactants include: 3-(3-Hydroxypropyl)-heptamethyltrisiloxane, ethoxylated, acetate, (CAS 125997-17-3); Polyethylene glycol monoallyl ether acetate (CAS 27252-87-5); Polyethylene glycol diacetate (27252-83-1) and the like.

When present, the quantity of the selected surfactant preferably ranges between 0.020 and 0.030%.

"DOW CORNING® 501W additive" is added in a proportion by weight ranging from approximately 0.020 to 0.025%. In the case in which one of the additives, the pH adjuster and/or the surfactant is present at a sufficient concentration and also properly meets the requirements of a low evaporation rate and viscosity as described in detail hereinabove, further components can be omitted. Likewise, it should be emphasized that the present composition can be utilized advantageously even if it is constituted by water only and another miscible liquid with a low evaporation rate, as indicated previously herein.

The present invention refers to the use of the aqueous composition described in detail hereinabove for printing by means of an indirect inkjet apparatus.

In fact, in this regard, the aqueous composition has proven to be capable of preforming an image, by means of an inkjet apparatus, on a transfer surface, so as to substantially prevent imperfections and/or defects in the decoration on the final material. Furthermore, the present composition makes it possible to overcome problems related to clogging of the injectors of common inkjet apparatuses, even after several days of inactivity of the machine and without particular measures or protective devices, thereby contributing decisively to lowering maintenance costs, in addition to optimizing production time.

Moreover, in one embodiment, the invention refers to the use of the present aqueous composition in the decoration, by means of indirect inkjet printing, of a preferably ceramic material, even more preferably in the form of tiles.

## Claims

1. Use of an aqueous composition comprising water and at least one miscible liquid for indirect inkjet printing, **characterized in that** said at least one miscible liquid has an evaporation rate lower than 1/30 of the evaporation rate of the water, said rate being measured in the presence of air with a rate of 0.2 m/s in a direction parallel to the surface of the liquid, at a pressure of 103,3 kPa (1033 mbar), a temperature of 40 °C, and relative humidity of 20%, and **in that** said aqueous composition does not contain pigments or other materials intended to remain present in the final decoration.

2. The use according to claim 1, wherein said miscible liquid is selected from among: a glycolic derivative, glycol ether, polyethylene glycol (PEG) methoxypolyethylene glycol (MPEG), silicone derivatives and amine derivatives.

3. The use according to claims 1-2, wherein said miscible liquid is present in an amount within the range of 0.005% to 20% by weight, preferably within the range of 0.005% to 5% by weight/weight (w/w).

4. The use according to claims 1-3, wherein said evaporation rate is lower than or equal to 1/50, preferably lower than or equal to 1/250.

5. The use according to claims 1 to 4, wherein said miscible liquid has a viscosity of less than 30 cP at 25 °C.

6. The use according to claims 1 to 5, wherein the aqueous composition further comprises an amine and/or a siloxane surfactant.

7. The use according to claims 1-6, wherein said miscible liquid is a derivative selected from: diethylene glycol n-butyl ether acetate (CAS 124-17-4); butoxytriglycol ether (CAS 143-22-6); diethylene glycol monobutyl ether (CAS 112-34-5); diethylene glycol monoethyl ether (CAS 111-90-0); triethylene glycol monoethyl ether (CAS 112-50-5); diethylene glycol monohexyl ether (CAS 112-59-4); ethylene glycol monohexyl ether (CAS 112-25-4); triethylene glycol monomethyl ether (CAS 112-35-6); dipropylene glycol n-butyl ether (CAS 29911 - 28-2); tripropylene glycol methyl ether (CAS 25498-49-1); tripropylene glycol n-butyl ether (CAS 55934-93-5); ethylene glycol n-butyl ether acetate (CAS 112-07-2); tetraethylene glycol methyl ether (CAS 23783-42-8); tetraethylene glycol butyl ether (CAS 1559-34-8); methoxypolyethylene glycol (MPEG), MPEG 350, polyethylene glycol (PEG) and PEG 200, ethylene glycol (CAS 107-21-1), diethylene glycol (CAS 111-46-6), triethylene glycol (CAS 112-27-6), tetraethylene glycol (CAS 112-60-7), dipropylene glycol methyl ether (CAS 34590-94-8), dipropylene glycol methyl ether acetate (CAS 88917-22-0), dipropylene glycol n-propyl ether (CAS 29911-27-1), propylene glycol n-butyl ether (CAS 5131-66-8), propylene glycol phenyl ether (CAS 770-35-4), propylene glycol diacetate (CAS 623-84-7), diethylene glycol methyl ether (CAS 111-77-3), diethylene glycol n-butyl ether (CAS 112-34-5), diethylene glycol n-butyl ether acetate (CAS 124-17-4), ethylene glycol n-butyl ether (CAS 111-76-2), ethylene glycol phenyl ether (CAS 122-99-6), and ethylene glycol n-butyl ether in a mixture (CAS 9004-77-7).

8. The use according to claim 7, wherein said miscible liquid is selected from: tripropylene glycol n-butyl ether and, preferably, methoxypolyethylene glycol 350.

9. The use according to any one of the preceding claims, wherein said water is double-distilled water.

10. The use according to any one of the preceding claims, wherein the aqueous composition further comprises an amine.

11. The use according to claim 10, wherein said amine is selected from: dimethylethanolamine (DMEA), monomethylethanolamine (MMEA), dimethylaminopropylamine (DMAPA), diethylenetriamine (DETA), ethylenediamine (EDA), aminoethylpiperazine-HP, n-aminopropylmorpholine, triethylenetetramine, and tetraethylenepentamine.

12. The use according to claim any one of the preceding claims, for decorating a ceramic material.

13. The use according to claim 12, wherein said ceramic material is in the form of a tile.

## Patentansprüche

1. Verwendung einer wässrigen Zusammensetzung, die Wasser und mindestens eine mischbare Flüssigkeit umfasst, für den indirekten Tintenstrahldruck, **dadurch gekennzeichnet, dass** die mindestens eine mischbare Flüssigkeit eine Verdampfungsrate von weniger als 1/30 der Verdampfungsrate des Wassers aufweist, wobei die Rate im Beisein von Luft mit einer Geschwindigkeit von 0,2 m/s parallel zur Flüssigkeitsoberfläche bei einem Druck von 103,3 kPa (1033 mbar), einer Temperatur von 40 °C und einer relativen Luftfeuchtigkeit von 20 % gemessen wird und dadurch, dass die wässrige Zusammensetzung keine Pigmente oder andere Materialien enthält, die in der endgültigen Dekoration vorhanden bleiben sollen.

2. Verwendung nach Anspruch 1, wobei die mischbare Flüssigkeit ausgewählt ist aus: einem Glykolderivat, Glykolether, Polyethylenglykol (PEG), Methoxypolyethylenglykol (MPEG), Silikonderivaten und Aminderivaten.

3. Verwendung nach den Ansprüchen 1-2, wobei die mischbare Flüssigkeit in einer Menge im Bereich von 0,005 bis 20 Gew.-%, vorzugsweise im Bereich von 0,005 bis 5 Gew.-% (Gew./Gew.) vorhanden ist.

4. Verwendung nach den Ansprüchen 1-3, wobei die Verdampfungsrate kleiner oder gleich 1/50, vorzugsweise kleiner oder gleich 1/250 ist.

5. Verwendung nach den Ansprüchen 1 bis 4, wobei die mischbare Flüssigkeit eine Viskosität von weniger als 30 cP bei 25°C aufweist.

6. Verwendung nach den Ansprüchen 1 bis 5, wobei die wässrige Zusammensetzung zudem ein Amin und/oder ein Siloxantensid umfasst.

7. Verwendung nach den Ansprüchen 1-6, wobei die mischbare Flüssigkeit ein Derivat ist, ausgewählt aus: Diethylenglycol-n-butyletheracetat (CAS 124-17-4); Butoxytriglycolether (CAS 143-22-6); Diethylenglycolmonobutylether (CAS 112-34-5); Diethylenglycolmonoethylether (CAS 111-90-0); Triethylenglycolmonoethylether (CAS 112-50-5); Diethylenglycolmonohexylether (CAS 112-59-4); Ethylenglycolmonohexylether (CAS 112-25-4); Triethylenglycolmonomethylether (CAS 112-35-6); Dipropylenglykol-n-butylether (CAS 29911-28-2); Tripropylenglykolmethylether (CAS 25498-49-1); Tripropylenglykol-n-butylether (CAS 55934-93-5); Ethylenglycol-n-butyletheracetat (CAS 112-07-2); Tetraethylenglycolmethylether (CAS 23783-42-8); Tetraethylenglycolbutylether (CAS 1559-34-8); Methoxypolyethylenglycol (MPEG), MPEG 350, Polyethylenglycol (PEG) und PEG 200, Ethylenglycol (CAS 107-21-1), Diethylenglycol (CAS 111-46-6), Triethylenglycol (CAS 112-27-6), Tetraethylenglycol (CAS 112-60-7), Dipropylenglycolmethylether (CAS 34590-94-8), Dipropylenglycolmethyletheracetat (CAS 88917-22-0), Dipropylenglycol-n-propylether (CAS 29911-27-1), Propylenglykol-n-butylether (CAS 5131-66-8), Propylenglykolphenylether (CAS 770-35-4), Propylenglykoldiacetat (CAS 623-84-7), Diethylenglykolmethylether (CAS 111-77-3), Diethylenglykol-n-butylether (CAS 112-34-5), Diethylenglykol-n-butyletheracetat (CAS 124-17-4), Ethylenglykol-n-butylether (CAS 111-76- 2), Ethylenglycolphenylether (CAS 122-99-6) und Ethylenglycol-n-butylether in einer Mischung (CAS 9004-77-7) .

8. Verwendung nach Anspruch 7, wobei die mischbare Flüssigkeit ausgewählt ist aus: Tripropylenglykol-n-butylether und vorzugsweise Methoxypolyethylenglykol 350.

9. Verwendung nach einem der vorhergehenden Ansprüche, wobei das Wasser zweifach destilliertes Wasser ist.

10. Verwendung nach einem der vorhergehenden Ansprüche, wobei die wässrige Zusammensetzung zudem ein Amin umfasst.

11. Verwendung nach Anspruch 10, wobei das Amin ausgewählt ist aus: Dimethylethanolamin (DMEA), Monomethylethanolamin (MMEA), Dimethylaminopropylamin (DMAPA), Diethylentriamin (DETA), Ethylendiamin (EDA), Aminoethylpiperazin-H P, n-Aminopropylmorpholin, Triethylentetramin, und Tetraethylenpentamin.

12. Verwendung nach einem der vorhergehenden Ansprüche zum Dekorieren eines Keramikmaterials.

13. Verwendung nach Anspruch 12, wobei das Keramikmaterial in Form einer Fliese vorliegt.

## Revendications

1. Utilisation d'une composition aqueuse comprenant de l'eau et au moins un liquide miscible pour l'impression à jet d'encre indirecte, **caractérisée en ce que** ledit au moins un liquide miscible a une vitesse d'évaporation inférieure à 1/30 de la vitesse d'évaporation de l'eau, ladite vitesse étant mesurée en présence d'air avec une vitesse de 0,2 m/s dans une direction parallèle à la surface du liquide, à une pression de 103,3 kPa (1033 mbars), une température de 40 °C et une humidité relative de 20 %, et **en ce que** ladite composition aqueuse ne contient pas de pigments ou d'autres matériaux destinés à rester présents dans la décoration finale.

2. Utilisation selon la revendication 1, dans laquelle ledit liquide miscible est choisi parmi : un dérivé glycolique, un éther de glycol, un glycol polyéthylénique (PEG) un glycol méthoxypolyéthylénique (MPEG), des dérivés de silicone et des dérivés d'amine.

3. Utilisation selon les revendications 1-2, dans laquelle ledit liquide miscible est présent en une quantité comprise dans la fourchette de 0,005 à 20 % en poids, de préférence dans la fourchette de 0,005 à 5 % en poids/poids (p/p).

4. Utilisation selon les revendications 1-3, dans laquelle ladite vitesse d'évaporation est inférieure ou égale à 1/50, de préférence inférieur ou égal à 1/250.

5. Utilisation selon les revendications 1 à 4, dans laquelle ledit liquide miscible présente une viscosité inférieure à 30 cP à 25°C.

6. Utilisation selon les revendications 1 à 5, dans laquelle la composition aqueuse comprend de plus une aminé et/ou un tensioactif de siloxane.

7. Utilisation selon les revendications 1-6, dans laquelle ledit liquide miscible est un dérivé choisi parmi : l'acétate d'éther n-butylique de diéthylène glycol (CAS 124-17-4) ; l'éther de butoxytriglycol (CAS 143-22-6) ; l'éther monobutylique de diéthylène glycol (CAS 112-34-5) ; l'éther monoéthylique de diéthylène glycol (CAS 111-90-0) ; l'éther monoéthylique de triéthylène glycol (CAS 112-50-5) ; l'éther monohexylique de diéthylène glycol (CAS 112-59-4) ; l'éther monohexylique d'éthylène glycol (CAS 112-25-4) ; l'éther monométhylique du triéthylène glycol (CAS 112-35-6) ; l'éther n-butylique du dipropylène glycol (CAS 29911-28-2) ; l'éther méthylique du tripropylène glycol (CAS 25498-49-1 ) ; l'éther n-butylique du tripropylène glycol (CAS 55934-93-5) ; l'acétate d'éther n-butylique d'éthylène glycol (CAS 112- 07-2) ; l'éther méthylique de tétraéthylène glycol (CAS 23783-42-8) ; l'éther butylique de tétraéthylène glycol (CAS 1559-34-8) ; le méthoxypolyéthylène glycol (MPEG), le MPEG 350, le polyéthylène glycol (PEG) et le PEG 200, l'éthylène glycol (CAS 107-21-1), le diéthylène glycol (CAS 111-46-6), le triéthylène glycol (CAS 112-27-6), le tétraéthylène glycol (CAS 112-60-7), l'éther méthylique de dipropylène glycol (CAS 34590-94-8), l'acétate d'éther méthylique de dipropylène glycol (CAS 88917-22-0), l'éther n-propylique de dipropylène glycol (CAS 29911-27-1 ), l'éther n-butylique de propylène glycol (CAS 5131-66-8), l'éther phénylique du propylène glycol (CAS 770-35-4), le diacétate de propylène glycol (CAS 623-84-7), l'éther méthylique du diéthylène glycol (CAS 111-77-3), l'éther n-butylique du diéthylène glycol (CAS 112-34-5), l'acétate d'éther n-butylique de diéthylène glycol (CAS 124-17-4), l'éther n-butylique d'éthylène glycol (CAS 111-76-2), l'éther phénylique d'éthylène glycol (CAS 122-99-6) et l'éther n-butylique d'éthylène glycol dans un mélange (CAS 9004-77-7).

8. Utilisation selon la revendication 7, dans laquelle ledit liquide miscible est choisi parmi : l'éther n-butylique de tripropylène glycol et, de préférence, le méthoxypolyéthylène glycol 350.

9. Utilisation selon l'une quelconque des revendications précédentes, dans laquelle ladite eau est de l'eau bidistillée.

10. Utilisation selon l'une quelconque des revendications précédentes, dans laquelle la composition aqueuse comprend de plus une amine.

11. Utilisation selon la revendication 10, dans laquelle ladite aminé est choisie parmi : la diméthyléthanolamine (DMEA), la monométhyléthanolamine (MMEA), la diméthylaminopropylamine (DMAPA), la diéthylènetriamine (DETA), l'éthylènediamine (EDA), l'aminoéthylpipérazine-H P, la n-aminopropylmorpholine, la triéthylènetétramine et la tétraéthylènepentamine.

12. Utilisation selon l'une quelconque des revendications précédentes, servant à décorer un matériau céramique.

13. Utilisation selon la revendication 12, dans laquelle ledit matériau céramique se présente sous la forme d'un carreau.
